# EUROPEAN PATENT APPLICATION

(11) **EP 4 184 290 A1**
(43) Date of publication of application: **24.05.2023**
(21) Application number: 21209315.7
(22) Date of filing: 19.11.2021
(51) Int. Cl.: G06F 3/01

(54) **SECURE AUGMENTED REALITY PROGRAMMER**

(71) Applicant: BIOTRONIK SE & Co. KG, 12359 Berlin (DE)
(72) Inventor: Jens, Müller, 14195 Berlin (DE); Thomas, Dörr, 12437 Berlin (DE); Miro, Selent, 14558 Nuthetal (DE)
(74) Representative: Biotronik Corporate Services SE

(57) **Abstract**

The present invention relates to methods and apparatuses for communicating with an implant, by an augmented reality, AR, device. The methods may comprise the steps of: providing data associated with the implant and transmitting a communication to the implant based on the provided data.

## Description

The present invention relates to methods and apparatuses for securely programming and/or interrogating an implant by means of an augmented reality device.

It is known that implants (such as e.g. cardiac rhythm management (CRM) devices) require to be programmed to the individual needs of a patient during the process of implantation and/or during subsequent check-ups.

The implantation process (e.g. during a surgery) may be seen as a highly complex process, requiring the full attention of the surgeon in charge. During the implantation process, it may be required that the attention of the surgeon needs to be drawn to both the patient (and the surgery) and a variety of parameters of the implant (e.g. configurations, health state information (e.g. a current pulse rate of the patient)) which may be displayed on a respective programming device (such as e.g. a monitor and/or a tablet).

Prior to the surgery (or a subsequent check-up/follow-up), the patient and the programming device may initially be placed in front of the doctor and the patient may not change the initial position during the treatment (e.g. the surgery or the check-up). It may be desirable that the patient is placed such that the visually perceptible field of the doctor comprises both the patient and the programming device. However, if the doctor moves his/her head, the visually perceptible field may change, and data displayed on the tablet may not be perceptible any longer together with the patient. The doctor may thus e.g. be in a situation during which it may not be possible to survey both the patient and the display data simultaneously, in particular if unexpected events occur. As a result, the doctor may have to physically move in between different positions or may not be in a situation to survey both the implant (e.g. by means of the programming device) and the patient during critical situations as they may occur during a surgery. Additionally, this know method may also be seen as time-inefficient.

The programming of the implant and/or the surveillance of relevant parameters of the implant may typically be performed by using programming devices which are also known as off-the-shelf (OTS) devices. OTS devices may be supplied by the manufacturer of the implant and/or at least administrated by the manufacturer of the implant (and/or any other authorized third party supplier) to ensure informational security (e.g. data security, data authenticity, etc.) during the programming process. Said informational security may in particular be endangered if the device used for programming is subject to hacker attacks which may lead to the intrusion of malicious code which may negatively affect the operation of the implant and may thus put the health state of the patient at risk. By relying on a centralized administration of the OTS devices, a satisfying level of informational security may be ensured.

However, said OTS devices may be seen disadvantageous with respect to their closedsystem nature. It may be required that said OTS devices are exclusively bought from a certain vendor, may be seen as rather expensive, do not provide a large variety of configuration options and their availability in a hospital may be limited (in particular, if one or more of the devices is defective).

As an alternative, it may also be possible to abstain from OTS devices (and the associated closed system architecture) by using bring-your-own-devices (BYOD) instead, such as tablets. However, this open system architecture may lead to the highly challenging task of ensuring data security and resistance to hacker attacks as the system architecture of those BYODs may not fully be administrated by e.g. the manufacturer of the implant or any other authorized entity.

There is thus a need for improving interrogation and/or programming of implants.

This need is at least in part met by a method performed by an augmented reality, AR, device, for communicating with an implant. The method may comprise the steps of: receiving a user input associated with data to be sent to the implant and transmitting a communication to the implant based on the data.

The usage of an AR device may provide the advantage, for a member of the medical staff (e.g. during a surgery such as the implantation process of the implant), to observe both the patient (e.g. the field of view relevant for the surgery) and view (displayed) data associated with the implant and make corresponding selections such that corresponding data can be sent to the implant (e.g. for interrogation and/or programming). The AR device (if e.g. embedded as AR glasses) may be configured to provide a view onto the patient and may further be configured to display/project a display associated with the implant onto the AR device without the disadvantageous requirement of changing positions (either physically or by moving the head). The surgeon may thus conveniently view data and make corresponding selections without having to modify his/her field of view such that the risk of missing important data and/or selections is mitigated.

The AR device may be implemented by AR glasses or an AR helmet which may be equipped with an app for providing the functionality required for the displaying of relevant data associated with the implant and for providing communication functionality with the implant.

The data to be sent to the implant may relate to data associated with an interrogation of the implant (e.g. a request for certain operation parameters of the implant (e.g. the current battery status), the current pulse rate of the patient, etc.) and/or at least one programming command to be sent to the implant (e.g. associated with setting the implant to a certain operation mode, etc.). The data may comprise a system-specific identifier, identifying the AR device, may be encrypted with a secret of the AR device, etc. The data may further be associated with a selection of an item from a list (such as e.g. a menu which comprises a display representative of one or more selectable commands to be sent to the implant).

The method may further comprise sending an indication associated with the user input to a remote communication system. Additionally or alternatively, the method may comprise receiving a response to the indication from the remote communication system and transmitting the communication to the implant upon receiving the response.

The indication may simply comprise the user input. The indication may further comprise additional (meta) data such as e.g. checksums, session-IDs, etc. which may be associated with the user input.

The response from the remote communication system may comprise the data associated with the user input. For example, it may comprise the data associated with the user input in a format that it is readable by the implant without the requirement of any further data conversion (e.g. it may be arranged with the corresponding semantics). Therefore, the received response may fulfil the requirements of the communication protocol required by the implant and may simply be forwarded from the AR device to the implant. The response may not be readable/accessible by the AR device. In particular, the semantics of the data associated with the user input is not required to be known or disclosed to the AR device, such that it also cannot be illegally be derived from the AR device, e.g., by hacker attacks, etc. Therefore, a secure end-to-end communication between implant and remote communication system may be enabled. Additionally or alternatively, the response may comprise an authorization, etc., wherein the authorization may be understood as a confirmation (initiated by the remote communication system), that the AR device may be allowed to communicate with the implant.

For example, the response may comprise the data associated with the user input in an encrypted manner, preferably encrypted by the remote communication system, preferably with a secret of the implant.

The AR device may transmit a communication to the implant comprising the data, e.g. as received from the remote communication system. This may occur without accessing the data, e.g. the data may be simply forwarded in the communication.

By including the data in the response in an encrypted manner, a secure communication of the data (associated with the user input) from the remote communication system to the AR device may be facilitated. Access to the data by unauthorized third parties may be prevented and data integrity (e.g. a prevention of unauthorized data changes) may be ensured. The encryption of the data may in particular ensure a secure communication between the implant and the remote communication system via the AR device (which may be understood as a relay device) and which may not be capable of accessing the data to be sent to the implant even in a scenario in which the AR device has been hacked, as the secret used to encrypt the data may still be unknown for the AR device, as it never leaves the implant and/or remote communication system (and/or since the semantics of the data is not known to the AR device). Therefore, a highly secure end-to-end encryption may be facilitated between the remote communication device and the implant.

The secret of the implant may additionally or alternatively be chosen such that it ensures confidentiality (i.e. an absence of unauthorized data access by third parties) of the data to be sent to the implant.

The user input may comprise a selection in an AR representation. An AR representation may relate to a representation of data which occurs in addition to a live view associated with the real world (as it may be perceived without an AR device). An AR representation may thus be understood as providing the real world view of e.g. a member of the medical staff with additional information, associated with the real world view, such as additional background information associated with the current view and/or situation. The background information may e.g. relate to an implant and may accompany an ongoing surgery (such as e.g. an implantation process). Said additional background information may e.g. pertain to an interrogation and/or a programing of the implant and/or may be used to ensure that an implant has been implanted in a satisfying manner and shows a desired functional behavior.

Based at least in part on said display of background information, it may be possible to select certain items, e.g. from a menu, e.g. in a context specific manner (e.g. wherein the items and/or the menu may depend on the current view/situation).

It may be possible that the user input in the AR representation is based on a menu which may be formatted differently (e.g. the font-size and/or the size of a diagram, etc.) depending on the wearer of the AR device, the position of the wearer relative to the patient and/or the progress of the surgery or the check-up, etc. such that an optimized representation of data, relevant for the current stage/step of the surgery or the check-up is facilitated. This may further facilitate a wearer-specific view on relevant data (on which the user input may be based) tailored to the preferences of a surgeon in charge

The selection may be based on an AR representation of data (e.g. a menu as described above). The AR representation may comprise a 2D representation and/or a 3D representation of the data and/or other objects. In either case, the data and/or the other objects may be embedded as buttons, text fields, histograms, diagrams/trends (e.g. temporal charts), real time intracardiac electrograms (IEGM), parameters associated with the implant (e.g. the current battery power, lifetime of the implant, etc.), etc. Selectable objects may e.g. be based on the operating system of the AR device, programming frameworks, the app being executed on the AR device and/or any other programming input.

The user input may comprise a gesture control and/or a voice control. It may be possible that a camera of the AR device is adapted to detect any movement of hands of a user of the AR device, e.g., a member of the medical staff which may be interpreted as a gesture to swipe through or to select certain options displayed on the AR device (e.g. a menu). The user input/selection may be associated with data to be sent to the implant. The menu may be embedded similar to a menu known from a website and/or an operating system and may comprise a graphical user interface (GUI). Any movements associated with the gesture control may be associated with a mouse pointer as known from a classical computer. By moving the hands in front of the AR device, a mouse pointer may be displayed on the AR device such that a user of the AR device may precisely control the movement of the pointer to a certain position to select an option and/or any other item associated with the current surgery and/or check-up.

Additionally or alternatively, the gesture control may also be embedded as a posture control. The posture control may e.g. comprise detecting the current orientation of the head of wearer of the AR device. By nodding and or turning the head, a respective posture sensor may detect the movement which may be translated into a movement of a mouse pointer (similar as outlined above with respect to the camera-based gesture control) and/or a discrete selection of items in a menu (e.g. each nodding (downwards) of the head may be associated with selecting the next item in a list (downwards) whereas each nodding (upwards) may be associated with selecting the next item in a list in an upward orientation).

The AR device may further comprise at least one microphone. The microphone may be used to receive acoustic commands which may be associated with the selection of one or more items of a menu. The acoustic command may relate to a spoken command (i.e. the AR device may comprise means for natural language processing). A spoken command may e.g. be "zoom in" (e.g. if a IEGM is used wherein the zoom-in-operation may be associated with zooming into a time axis) and/or "show details" (e.g. in a list of alarms) to provide the wearer of the AR device with a more detailed view of the current information displayed (e.g. the display of the pulse rate over the last 10 s instead of a preceding display of the pulse rate over 60 s and/or meta-information (i.e. assumptions which may have been made to generate the displayed data)). Commands which may be understood by the AR device may be based on the operating system of the AR device, programming frameworks, the app being executed on the AR device and/or any other programming input.

It may also be possible that the gesture and/or the voice control is associated with a command which is only processed locally on the AR device without the requirement of sending an indication to the remote communication system for processing. Such a command may e.g. comprise one or more of a command of zooming in or out of e.g. a certain diagram displayed on the AR device, switching the AR device on and/off (e.g. to allow an "undisturbed" view onto the patient without the augmented information associated with the implant).

The AR device may further be equipped with a loudspeaker such that a wearer of the AR device may additionally be provided with an acoustic feedback (e.g. an alarm) if e.g. a situation which may be harmful for the patient is detected. The AR device may further comprise means for additionally or alternatively providing haptic feedback (e.g. a haptic alarm) if a situation is detected which may be harmful for the patient.

The feature that the user input may comprise a gesture and/or voice control of the AR device may provide the advantage of allowing the user of the AR device to interact with the AR device freely, i.e. without any physical contact. This provides the advantage that, e.g., a surgeon may use both hands for the surgery without being disrupted by any physical interaction with the AR device (such as e.g. pressing certain buttons). The absence of the requirement of a physical interaction with the AR device further allows a hygienic interaction with the AR device as it may be required (in particular) during a surgery.

The present invention further relates to a method, by an augmented reality, AR, device, for communicating with an implant. The method may comprise the steps of: receiving data associated with the implant from the implant and displaying an AR representation based on the received data.

The received data may relate to a response to a preceding interrogation of the implant and/or to a preceding programming command (e.g. confirming that the command has been implemented). Additionally or alternatively, it may also be possible that the implant proactively sends data to the AR device, e.g., if a certain operational stage is detected which may be regarded as harmful for the health of the patient (e.g., a surpassing of a certain pre-defined threshold for the pulse rate of the patient, etc.).

The method may further comprise sending an indication associated with the received data to a remote communication system. By requiring that the indication is sent to the remote communication system, the (secure) remote communication system may verify if the AR device, from which the indication has been sent, is authorized to receive and/or access/display the received data associated (e.g. comprised at least in part) in the indication. Thus, intrusion attacks by unauthorized third parties may be prevented.

The indication may comprise a device-specific identifier, identifying the AR device, may be encrypted with a secret of the AR device system, etc.

The method may further comprise receiving a response to the indication from the remote communication system and displaying the AR representation based on the response. Similarly, as outlined above with respect to the provided data that may be sent from the remote communication system to the AR device, also the data received from the implant (at the AR device) may be encrypted, preferably with a secret of the implant, to ensure data confidentiality and integrity during the communication. Also as outlined above, the encryption with a secret of the implant may ensure that the AR device is only capable of relaying the received data without being able to access/read the received data. Also concerning the received data, the AR device does not need to know the semantics, such that the corresponding algorithms do not have to leave the implant and/or the remote communication system. The AR device may, in the simplest case, just forward the data to the remote communication system, possibly after appending further data and/or encryption with a secret of the AR device, etc.

The response may include at least a portion of the received data in a decrypted manner and/or information with which at least a portion of the received data can be displayed. The AR representation may be displayed based on the response. The displaying of the AR representation based on the response may be implemented identical to the AR representation associated with the creation of provided data as outlined above.

Including the received data in the response in a decrypted manner (or information with which at least a portion of the received data can be displayed) may be seen as the result of a successful verification (by the secure remote communication system) that the AR device is entitled to receiving the (received) data. The decryption may relate to a decryption with respect to the secret shared between the remote communication system and the implant.

In addition to any of the above-mentioned method steps, the method may further comprise that the communication between the AR device and the remote communication system is encrypted, preferably with a secret of the AR device. By encrypting the communication between the AR device and the remote communication system, additional security measures may be provided such that the confidentiality and the integrity of the communication between the AR device and the remote communication system may be ensured and strengthened. This may in particular be valuable as the communication between the AR device and the remote communication device may be performed over the internet (or any other public network).

The encryption of the communication with a secret of the AR device may be performed in addition to an encryption with a secret shared between the remote communication system and the implant (which may be transparent to the AR device).

Moreover, the encryption with a secret of the AR device may also relate to a certificate issued for the AR device. Therefore, the AR device may identify itself as e.g. an eligible AR device for communication with the implant and the remote communication system.

The present invention further relates to an augmented reality, AR, device for communicating with an implant. The AR device may comprise means for receiving a user input associated with data to be sent to the implant. The AR device may further comprise means for transmitting a communication to the implant based on the data.

Additionally or alternatively, the AR device may comprise means for receiving data associated with the implant from the implant. The AR device may further comprise means for displaying an AR representation based on the received data.

The AR device for communicating with an implant may comprise means for performing any of the functionalities outlined herein with reference to method steps.

The present invention further relates to a method, by a remote communication system, for communicating with an augmented reality, AR, device. The method may comprise the steps of: providing at least one programming option, associated with an implant, to the AR device for displaying and receiving an indication, from the AR device, based at least in part on the at least one programming option. Additionally or alternatively, the method may comprise receiving data from an implant via the AR device, processing at least a portion of the received data, and providing display information to the AR device at least in part based on the processing.

The providing of at least one programming option may be understood as, e.g., a menu (preferably comprising one or more items) based on which a selection of the user input (by the AR device as described above) may occur.

With reference to a remote communication system, further method steps may be implemented which mirror the method steps outlined above for the AR device. It may thus be ensured that the remote communication system is capable of serving any request from the AR device and to initiate the AR device to forward data to the implant.

The present invention further relates to a remote communication system, for communicating with an augmented reality, AR, device. The remote communication system may comprise means for providing at least one programming option, associated with an implant, to the AR device for displaying and the remote communication system may comprise means for receiving an indication, from the AR device, based at least in part on the at least one programming option. Additionally or alternatively, the remote communication system may comprise means for receiving data from an implant via the AR device, means for processing at least a portion of the received data, and means for providing display information to the AR device at least in part based on the processing.

The remote communication system may comprise means for performing any of the functionalities outlined herein with reference to method steps. This may provide the advantage that the remote communication system is capable of providing mirroring features with respect to the AR device such that the remote communication system is capable of serving the AR device.

The present invention further relates to a system for communicating with an implant. The system may comprise at least two of the following: the augmented reality device as described herein, the remote communication system as described herein, an implant as described herein.

The implant may be a class III medical device. A class III medical device may relate to a device which directly connects with the (central) circulatory and/or nervous system. It may also be possible that the implant relates to any other medical implant.

The implant may be a cardiac rhythm management (CRM) device (e.g. a pacemaker, defibrillator), may be an implant for neuronal stimulations (e.g. for pain relief) and/or any other (programmable and/or active) implant.

For the user, participating in the communication between the remote communication system and the implant by means of the AR device, the AR device may be understood as the front end, whereas the remote communication system may be seen as the backend of communication with the implant.

The following figures are provided to support the understanding of the present invention:
- Fig. 1: Illustration of an overview of an exemplary setup of a system for communicating with an implant;
- Fig. 2: Detailed illustration of an exemplary frontend webservice provided to the AR device;
- Fig. 3: Illustration of a classical 2D programmer interface;
- Fig. 4: Illustration of a classical 2D programmer interface after shrinking;
- Fig. 5: Illustration of a parallel representation of a 2D programmer interface and a window area for additionally displaying 2D and 3D objects;
- Fig. 6: Illustration of an actualization of objects in a window area with individual 2D and 3D objects.

The following detailed description outlines possible exemplary embodiments of the invention.

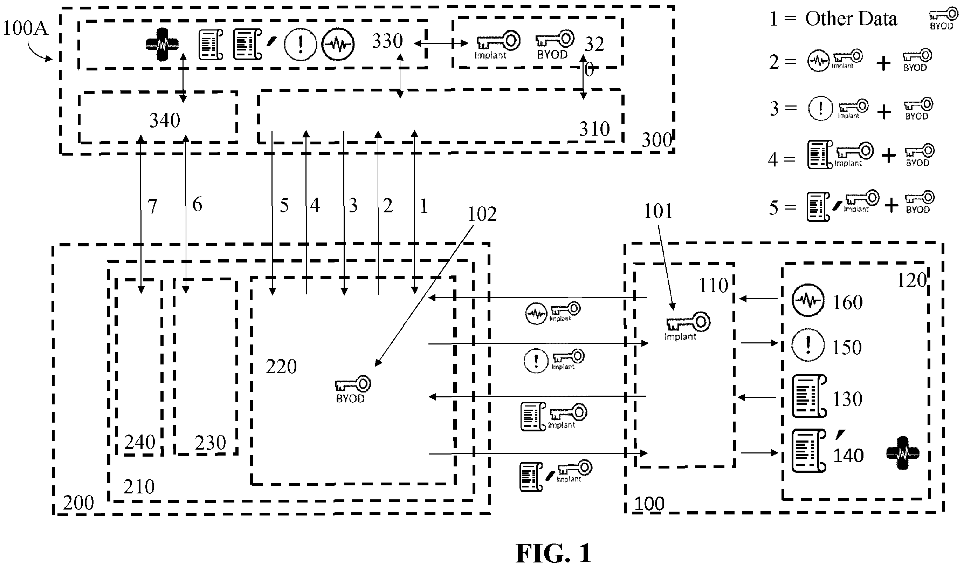

Fig. 1 shows an overview of a system 100A as it may be used for the communication of a remote communication system 300 with an implant 100 by means of an AR device 200 as described herein.

Implant 100 may be in direct communication with AR device 200 but may not be in direct communication with remote communication system 300. Additionally, AR device 200 may be in direct communication with remote communication system 300 and implant 100.

Any communication to (e.g., data associated with user input at AR device 200) and from (e.g., received data) implant 100 may be encrypted based at least in part on a secret 101 of implant 100. Secret 101 may be shared among implant 100 and remote communication system 300, but it may be unknown to AR device 200.

Secret 101 may be shared between implant 100 and remote communication system 300 such that it ensures both confidentiality and integrity of the data communication between these two entities, e.g. by applying the Advanced Encryption Standard (AES) and/or Galois/Counter Mode (GCM). However, if implant 100 does not possess sufficient computation power and/or if implant 100 does not comprise a suitable additional dedicated cryptographic hardware module, a separate secret may be used to ensure confidentiality (e.g. AES and/or Rivest Cypher 5 (RC5)) and to ensure integrity (e.g. Cypher Message Authentication Code (CMAC)), respectively. When encrypting the data, it may be seen as preferable to first encrypt the data with respect to integrity and then with respect to confidentiality by applying the associated secrets in the respective encryption order. When decrypting the data, the decrypting order may follow a correspondingly inverted encryption order.

Secret 101 may e.g. be obtained during the manufacturing process of implant 100 and may be disclosed to both implant 100 and remote communication system 300 (only). In particular, remote communication system 300 may store secret 101 for the entire lifecycle of implant 100. It may also be possible that implant 100 obtains more than one secret which is shared between implant 100 and remote communication system 300. In any case, the secret assigned to implant 100 is preferably individual (i.e. unique) to implant 100.

AR device 200 may forward any communication from/to implant 100 to/from remote communication system 300. AR device 200 may, for example, only relay the communication without being capable of semantically accessing the data which is relayed.

AR device 200 may additionally encrypt communications to remote communication system 300 with a secret 102 of the AR device 200 (that may be a BYOD). It may also be possible that AR device 200 adds additional AR device-specific data (e.g. business layer protocol data, e.g. including one or more identifiers, certificates, and/or checksums, etc.) and/or remote communication system-specific data to the communication prior to encrypting the communication with secret 102. Said additional data may e.g. be interpreted by remote communication system 300, and validity of the communications may be checked, based thereon. It may be foreseen that secret 102 is a unique secret 102 assigned to AR device 200 which may be stored thereon (and on remote communication system 300). To ensure the security of secret 102 on AR device 200, a Trusted Platform Module (TPM) may be provided on AR device 200. Secret 102 may be for asymmetric encryption, e.g. based on Rivest-Shamir-Adleman (RSA). Secret 102 may ensure confidentiality and integrity of data as well as authenticity of the communication partner.

Additionally or alternatively, AR device 200 may also receive communications from remote communication system 300 which may be encrypted with a secret 102 of the AR device 200. When decrypting, by AR device 200, AR device 200 may check whether remote communication system 300 has added additional remote communication system-specific data (e.g. business layer protocol data) to the data to be sent to the AR device 200. Said additional data may then be interpreted by AR device 200, and validity of the communications may be checked, based thereon. Secret 102 may be stored by remote communication system 300.

Any of secrets 101 and/or 102 may refer to asymmetric and/or symmetric encryption.

The communication between AR device 200 and implant 100 may be encrypted with secret 101 that may be shared between implant and 100 and remote communication system 300 (but unknown to AR device 200). The communication may further occur by means of a short-range communication technology. Such a short-ranged communication technology may be based on a technology-specific protocol (e.g. Bluetooth (Low Energy)) which may foresee a technology-specific encryption for the underlying communication. The technology-specific protocol may be applied to the communication between the AR system 200 and implant 100 such that the already encrypted communication between implant 100 and AR device 200 may additionally be wrapped by the technology-specific encryption and may thus be seen as encrypted twice based on two different encryption protocols and/or secrets. It may be foreseen that a session specific secret (e.g. 102 or 103) is exchanged between implant 100 and AR device 200 to additionally ensure the integrity and authenticity of the communication entities and/or that the technology-specific encryption may be session-specific.

The communication between the AR device 200 and the remote communication system 300 may be encrypted with secret 101, and, optionally, additionally with a secret 102 of the AR device 200. The communication may be performed over the internet. The internet communication technology may possess its own communication protocol (e.g. HTTPS, SSL, SSH, etc.) which may also foresee a technology-specific encryption. Therefore, it may be possible that the encrypted communication between the AR device 200 and the remote communication system 300 is additionally wrapped by the technology-specific protocol and may thus be seen as encrypted two, or optionally three times based on three different encryption protocols and/or secrets.

Implant 100 may at least comprise a communication unit 110 and a therapy unit 120.

Communication unit 110 may refer to a logical entity of implant 100 which accounts for any communication related aspects (e.g. receiving and sending a communication (and associated data)) of implant 100. Communication unit 110 may contain a communication interface for performing a communication with AR device 200. This may in particular comprise the application of the associated communication protocol of the communication technology used between the two entities. Communication unit 110 may additionally or alternatively comprise transmission and reception circuitry such as e.g. one or more antennas. Additionally or alternatively, communication unit 110 may also comprise means for the encryption and decryption of data to be sent to the remote communication system 300 by means of the AR device 200. Therefore, communication unit 110 may locally store respective secrets (e.g. a secret 101 shared between the remote communication system 300 and the implant 100 and/or a secret (e.g. 102 or 103) shared between the AR device 200 and the implant 100).

Communication unit 110 may provide technology-specific means, e.g., for bluetooth low energy (BLE), such that implant 100 may be capable of communicating, e.g., with AR device 200 over Bluetooth. However, it may also be possible that communication unit 110 provides any other short-range communication technology (e.g., near field communication (NFC), Wi-Fi, etc.). Each of the technologies may provide a technology-specific encryption which may be used to additionally encrypt the communication between implant 100 and AR device 200 and/or remote communication system 300.

Communication unit 110 may internally communicate with therapy unit 120 and both units may be logically separated. Therapy unit 120 may comprise information on one or more therapy related aspects the implant is in charge of. Therapy unit 120 may thus be understood as administrating e.g. real time data 160 associated with implant 100 such as e.g. IEGMs, at least one therapy related command 150, such as e.g. at least one of an activation or deactivation of temporary sub-programs (e.g. programs which should only be executed (temporarily) in addition to a main program being executed on the implant), an extension of at least one temporary sub-program (e.g. relating to rapid pacing for transcatheter aortic valve implantation), an activation or deactivation of an implantable cardioverter/defibrillator (ICD) therapy, an initiation of an emergency shock (e.g. in the sense of a defibrillator), an activation or deactivation of a VVI mode (e.g. the activation or deactivation of the stimulus of a single ventricle, e.g. to account for atrial fibrillation) and/or any generic administration of the implant (e.g. updates, downgrades, factory reset, etc.). Therapy unit 120 may further administrate direct access to the internal implant memory (e.g. comprising protocols, current settings, etc.). Direct access to the internal implant memory may be provided for at least two reasons: it may be possible that a dedicated access is provided to access data 130 to be sent from implant 100 by a dedicated communication link from therapy unit 120 to communication unit 110. Additionally or alternatively a (separate) access may be provided to store data 140 sent to the implant 100, e.g., by a dedicated communication link from communication unit 110 to therapy unit 120. It may thus be possible to provide different means for accessing the internal implant memory for up- and downstream data such that a load balancing and collision free communication with the implant is facilitated. The implant memory may e.g. comprise therapy settings, statistics, recordings (e.g. of ECGs,in particular intracardiac ECGs or IECGMs), user data (e.g. owner of the implant, implantation date, etc.), firmware and/or other information. Therapy unit 120 may further be in internal communication with respective sensors which are capable of sensing health related aspects of the patient (e.g. a pulse rate, an ECG, in particular intracardiac ECGs or IECGMs, etc.).

AR device 200 may comprise an app 210. App 210 may comprise a communication unit 220, a UI/UX unit 230 and an AR unit 240 (e.g. as logical entities).

App 210 may be executed on AR device 200 and may be downloadable from an app store and/or may be supplied by the manufacturer of the AR device 200 (e.g. as an OEM software).

App 210 may provide functionality for facilitating the secure interrogation and/or programming of implant 100 by AR device 200 via remote communication system 300. This goal may be provided by the capability for establishing a communication with implant 100, and registration and signing-in at the remote communication system 300. Further, data received from the implant 100 may be relayed to the remote communication system 300. App 210 (e.g. communication unit 220) may provide functionality for (bidirectional) data exchange 1 with remote communication system 300 (e.g. a communication unit 310 thereof), and/or for processing data (e.g. preparing its transmission and reception (e.g. by applying the underlying communication protocol)).

Additionally or alternatively, it may be possible that app 210 (e.g. by a separate logical entity UI/UX unit 230) also provides means for data exchange with a front-end webservice 340 of remote communication system 300 (as further described below), e.g., by receiving a user input by means of UI/UX unit 230 and forwarding of the received input to frontend webservice 340 of remote communication system 300.

Additionally or alternatively, it may be possible that also AR unit 240 is in communication with frontend webservice 340 of remote communication system 300. The communication link of the AR unit 240 with frontend webservice 340 of remote communication system 300 may be logically separated from (i.e. a separate communication link) the communication link between the UI/UX unit 230 and frontend webservice 340.

App 210 may further be equipped with security measures to prevent reverse engineering, debugging, code, key and/or API manipulation. This may at least in part be based on app hardening mechanisms such as string encryption, class encryption, metadata removal, renaming, checksum(s), anti-debugging, jailbreak detection, shut-down and/or other suitable measures.

Additionally or alternatively, app 210 may also comprise measures to prevent the patient (carrying implant 100) from potentially dangerous situations (e.g. situations which are regarded as potentially harmful to the patient and/or which may be seen as life threating) which may arise from e.g. erroneous configurations of implant 100 and/or unsuccessful communications with implant 100 and/or any other events. Such measures may e.g. comprise commands (rules) to terminate the potentially harmful state and/or to provide diagnostics for a detailed understanding of the current situation and/or suggestions to be provided to the user of app 210 to overcome the current situation.

Communication unit 220 may refer to a (logical) entity of AR device 200. Communication unit 220 may provide any software (e.g. protocols) and/or hardware (e.g. transmission and reception related circuitry such as e.g. antennas) related aspects required for the communication of communication unit 220 with implant 100 and with remote communication system 300. Communication unit 220 may in particular provide functionality for at least two different communication technologies such that the communication between implant 100 and AR device 200 may be different from the communication of AR device 200 and remote communication system 300 (e.g. by using different communication technologies). Communication unit 220 may comprise means for receiving and sending at least the data associated with reference numerals 140-160 as outlined above with respect to communication unit 110.

Communication unit 220 may provide encryption and decryption functionality such that any communication between the AR device 200 and the remote communication system 300 may be en- and/or decrypted. Any communication between the remote communication system 300 and AR device 200 may be encrypted with a secret 102 shared between the remote communication system 300 and AR device 200.

UI/UX unit 230 may be a logical entity separate from the communication unit 220. It may provide a user interface such that a user of AR device 200 is capable of interacting with AR device 200. By means of UI/UX unit 230, a GUI may be supplied to the user of AR device 200 which may be operable by means of e.g. a gesture and/or a voice control to receive a user input. In such an application scenario, UI/UX unit 230 may further comprise or may be in communication with a physical display and/or projection means onto e.g. a glass surface of glasses if AR device 200 is embedded as a pair of AR glasses. UI/UX unit 230 may provide associated control hard- and software. By means of UI/UX unit 230 it may be possible to access webservices and/or apps (in addition or alternative to app 210) associated with implant 100 which may provide selection options of one or more parameters associated with settings for implant 100. UI/UX unit 230 may further comprise one or more of a microphone (for receiving voice commands and/or interrogations by the user, e.g. to be converted into a command for implant 100), a camera (e.g. for capturing gesture control related movements of a user), speakers, etc.

UI/UX unit 230 may be equipped with dedicated communication means (similar to the communication means disclosed with respect to communication unit 220) for communicating with remote communication system 300. It may also be foreseen that UI/UX unit 230 and communication unit 220 are logical entities which both use the service of underlying communication hard- and/or software to communicate with remote communication system 300.

UI/UX unit 230 may preferably be used to display 2D renderings of data such as e.g. graphs, diagrams, values, etc. as they may possibly be embedded in a website-like environment.

AR unit 240 may be equipped with means for displaying, processing and rendering of data which is associated with a 3D representation of objects such as more 3D diagrams, buttons, etc. However, it may also be foreseen that AR unit 240 is capable of processing 2D representations of data. Additionally, AR unit 240 may be configured identically to UI/UX unit 230 and may comprise all features of UI/UX unit 230.

Remote communication system 300 may comprise a communication unit 310, a cryptographic key management system (CKMS) 320, a therapy unit 330 and a frontend webservice 340.

Communication unit 310 may refer to a logical entity of remote communication system 300 which accounts for any communication related aspects (e.g. receiving and transmission of a communication) of the remote communication system 300. Communication unit 310 may in particular be in communication with AR device 200, e.g. communication unit 220. Communication unit 310 may comprise similar features as communication unit 220 such that a communication between communication unit 310 and communication unit 220 is facilitated. Communication unit 310 may not be capable of decrypting/encrypting any communications and may not interpret any implant related dataindependent of the aspect whether the data is to be transmitted or received by remote communication system 300. Communication unit 310 may only check the validity of any AR device-specific data (e.g. business layer protocols, etc.) which may have been received.

However, in some examples, communication unit 310 may be capable of de- and encrypting data of AR device 200 by means of secret 102, and it may perform the validity check after decryption with secret 102.

Communication between communication unit 220 and communication unit 310 may e.g. comprise bidirectional communication 1 which may relate to non-medical data exchange between AR device 200 and remote communication system 300. Such non-medical data may e.g. comprise credentials associated with AR device 200 to sign-in at remote communication system 300. Additionally or alternatively, the credentials may also be used to register AR device 200 at the remote communication system 300 for the communication described herein. Communication 1 may further be used for the exchange of status information such as e.g. availability information (e.g. current load factor with respect to processing capability and/or transmission bandwidth) of each of the AR device 200 and the remote communication system 300. Additionally or alternatively, communication 1 may also relate to administration related data which may be used to update app 210 and/or to administrate all entitled AR devices 200 for communicating with implant 100. The communication between communication unit 220 and communication unit 310 may be based on a wired (e.g. Ethernet, a fibre-based link, etc.) and/or a wireless communication technology (e.g. Wi-Fi, 5G (or successors), etc.). It is preferred to use a low-latency communication technology (with a latency < 100 ms) allowing for data rates exceeding 100 Mbit/s (downstream).

The further uni-directional communications 2 and 3 may relate to the communication of (real time) data 160 and therapy related command(s) 150. Uni-directional communications 4 and 5 may relate to direct access to the internal memory of the implant and relate to data sent 130 from the implant 100 and to data to be sent 140 to the implant 100 to/from remote communication system 300.

Communication 1 may be encrypted with a secret 102 of the AR device 200. Any of communications 2-5 may be encrypted with a secret 101 of the implant and may additionally be encrypted with a secret 102 of the AR device 200.

Any of communications 2-5 may be encrypted twice or three times, e.g. with secret 101 and/or secret 102.

In any application scenario of the above mentioned communication links it may be required that AR device 200 needs to sign in to remote communication system 300 prior to communicating. The process of signing-in may require a 2-factor authentication. Based thereon, remote communication system 300 may only offer access to AR device 200 upon a reception and verification of the second factor.

It may be possible that any of said communications 1-5 between the AR device 200 and the remote communication system 300 occurs without any further (relaying) entities in between or, e.g., by means of e.g. at least one additional cloud system in between AR device 200 and remote communication system 300. However, it may also be possible that remote communication system 300 is operated in a distributed manner, e.g. by means of scalable real time IoT infrastructures such as cloud services, Software as a Service (SaaS), etc. which may also be used to account for varying regional requirements. As an example, it may be possible that a remote communication system (such as remote communication system 300) needs to be operated in a country to serve an AR device (such as communication system 200) also operated in that country. However, some countries may also allow that AR devices operated in the country, may communicate with remote communication systems in other countries.

In any case, it is preferable but not necessarily required that remote communication system 300 is administrated by the manufacturer of implant 100 in a secure environment.

Communication unit 310 may be in internal communication with CKMS 320.

CKMS 320 may store the secret 101 shared between the remote communication system 300 and implant 100 and/or secret 102 shared between the remote communication system 300 and the AR device 200. Secrets 101 and/or 102 may be securely stored in the CKMS 320 (which they may never leave) such that they do not appear in a public communication (e.g. in between the remote communication system 300 and the AR device 200). Data stored in the CKMS may not be accessible by any other communication entity and/or third parties.

Additionally, CKMS unit 320 may also comprise means for decrypting data received from communication unit 310 using at least one of the stored secrets 101 and/or 102. Vice versa, CKMS may also use at least one of the stored secrets 101 and/or 102 for encrypting data to be transmitted, by remote communication system 300, to implant 100 and/or to AR device 200.

In particular, CKMS unit 320 may receive data from communication unit 310 to be decrypted. CKMS 320 may then return decrypted data to communication unit 310. Vice versa, CKMS 320 may also receive data to be encrypted prior to an encrypted data transmission (e.g. by means of communication unit 310).

CKMS 320 may be in internal communication with therapy unit 330. Therapy unit 330 may receive decrypted data from CKMS unit 320 and may be seen as the final receiver of any data transmitted from implant 100. Vice versa, therapy unit 330 may also forward data to be transmitted to implant 100 and/or AR device 200, to CKMS 320 for encryption by the respective secret.

Therapy unit 330 may comprise means for processing received data, e.g., from implant 100 (e.g. to decide whether the implant improves the health state of the patient carrying implant 100 or whether a deterioration of the health state of the patient carrying implant 100 occurs). Therapy unit 330 may further comprise means for eliciting whether received data may be presented to AR device 200 (as part of a validity check). If it is determined that the received data may be presented to AR device 200, associated data may be forwarded to frontend webservice 340 with which therapy unit 330 is in internal communication. It may also be possible, vice versa, that therapy unit 330 receives an indication of data from frontend webservice 340 which is to be transmitted, by remote communication system 300, to implant 100. In that case, therapy unit 330 may elicit whether the AR device 200 and/or the respective data is entitled to be transmitted to implant 100. This may relate to a validity check as disclosed herein. If so, the corresponding data may be generated and then encrypted with secret 101 by CKMS 320.

Similarly as UI/UX unit 230, AR unit 240 and communication unit 220, frontend webservice 340 and communication unit 310 may relate to separate logical entities.

It may further be foreseen that therapy unit 330 comprises means for storing and/or administrating patient related data such as e.g. the assignment of certain implants to patients (e.g. by means of an implant specific ID assigned to a patient), one or more recordings of health related data associated with a patient (e.g. real time IEGMs, therapy settings, statistics, historic readouts of the internal memory of the implant) and/or a set of commands to be sent to implant 100. This data may be stored in remote communication system 300, e.g. in a database, a blockchain, in text files, etc. Therapy unit 330 may be seen as the only location at which health related data may be found in a decrypted manner (besides implant 100).

Moreover, therapy unit 330 may comprise a detailed knowledge of the setup and/or memory structure of implant 100. Therefore, any data (e.g. based on a user input received by AR device 200) to be sent to implant 100, by remote communication system 300, which may most likely not follow the syntax requirements of implant 100, may be translated, by therapy unit 330, into a command/data which may be understood by implant 100 (e.g. in response to an indication received by remote communication system 300 from AR device 200, in particular received by webservice 340 from UI/UX unit 230 and/or AR unit 240). Vice versa, if therapy unit 330 receives data from implant 100, therapy unit 330 may translate the received data (following the syntax of implant 100) into a format which may be understood by other entities of remote communication system 300, e.g. frontend webservice 340 with which therapy unit 330 is in internal communication. Frontend webservice 340 may then provide a response to UI/UX unit 230 and/or AR unit 240 such that the latter may display or may initiate the display of aspects of the received data.

Additionally it may also be possible that therapy unit 330 is equipped with one or more measures to prevent the patient (carrying implant 100) from events which may deteriorate the health state of the patient and/or which may even be seen as life threating similar as outlined above with respect to app 210.

Frontend webservice 340 may provide a webserver which may be accessible over the intranet and/or internet. Frontend webservice 340 may be understood as an interface for data exchange between the remote communication system 300 and AR device 200. Frontend webservice 340 may comprise a webserver and may comprise a website. Data received, by remote communication system 300, and processed therein as described above, may be displayed by means of frontend webservice 340. The display may be based on providing a website which may be accessed by an entitled entity, e.g. UI/UX unit 230 and/or AR unit 240. The display may e.g. be based on providing charts of temporal evolutions of vital parameters associated with a patient carrying implant 100. Additionally or alternatively, webservice 340 may provide means for selecting (e.g. buttons, sliders, toggle switches, check boxes, etc.) certain operation parameters implant 100 should be set to. Alternatively or additionally, it may also be possible that frontend webservice 340 relates to certain sockets, an SSH tunnel, etc. by means of which the respective data may be accessed by entitled entities.

The website may be server-sided or client-based. It may also be possible that the website comprises a combination of both technologies.

Any input received by frontend webservice 340, e.g. from UI/UX unit 230 and/or AR unit 240, may be provided to therapy unit 330 for further processing as described above. However, it may also be possible that a user input is associated with data that is not required to be forwarded to implant 100 (e.g. an adjustment of the scale of a diagram such as zooming-in or -out of a diagram). In such a case, the data associated with the user input may solely be processed by frontend webservice 340. However, it may also be possible that the received input undergoes a validity check in therapy unit 330 prior to being returned to frontend webservice 340 which may update the associated display.

It may further be possible that frontend webservice 340 also comprises one or more measures to prevent any events which may be harmful for the health state of the patient as outlined above with respect to therapy unit 330.

An entitled entity to access frontend webservice 340 may e.g. be AR device 200 and in particular UI/UX unit 230 and/or AR unit 240 as described above. UI/UX unit 230 and/or AR unit 240 may for example comprise (but are not limited to) an internet browser for accessing the website supplied by frontend webservice 340. Frontend webservice 340 may be accessed by UI/UX unit 230 and/or AR unit 240 by means of (bidirectional) communications 6 and 7, respectively. Communication 6 and/or 7 may also be encrypted and independent of communications 1-5 performed by the communication unit 220 and communication unit 310.

Communications 6 between UI/UX unit 230 and remote communication system 300 may be logically separated from the communication by communication unit 220 with remote communication unit 310. The communication technology used by UI/UX unit 230 may differ from the communication technology used by communication unit 220 or may be equal to it.

Communication 7 between AR unit 240 and remote communication system 300 may be logically separated from the communication by communication unit 220 with remote communication unit 310. The communication technology used by the AR unit 240 may differ from the communication technology used by communication unit 220 or may be equal to it.

Communications 6 and/or 7 may also be logically separated. Both can preferably be encrypted with an asymmetric encryption technology such as RSA to ensure the confidentiality, integrity and authenticity (e.g. of the communicating entities) of the data exchanged between frontend webservice 340 and UI/UX unit 230 and/or AR unit 240.

Methods to generate and exchange a respective secret/key may e.g. be the Hypertext Transfer Protocol Secure (HTTPS) and/or Message Queuing Telemetry Transport (MQTT). To avoid vulnerability for man-in-the-middle (MITM) attacks and to ensure that UI/UX unit 230 and/or AR unit 240 only communicate with the right frontend webservice 340 and not with any third-party webservices which mimic to be frontend webservice 340, HTTP Public Key Pinning (HPKP)/SSL-Pinning and/or any other suitable technology may be used to ensure that only frontend webservice 340 may acquire a unique and trustful certificate with which frontend webservice 340 may authenticate itself to UI/UX unit 230 and/or AR unit 240 as trustful.

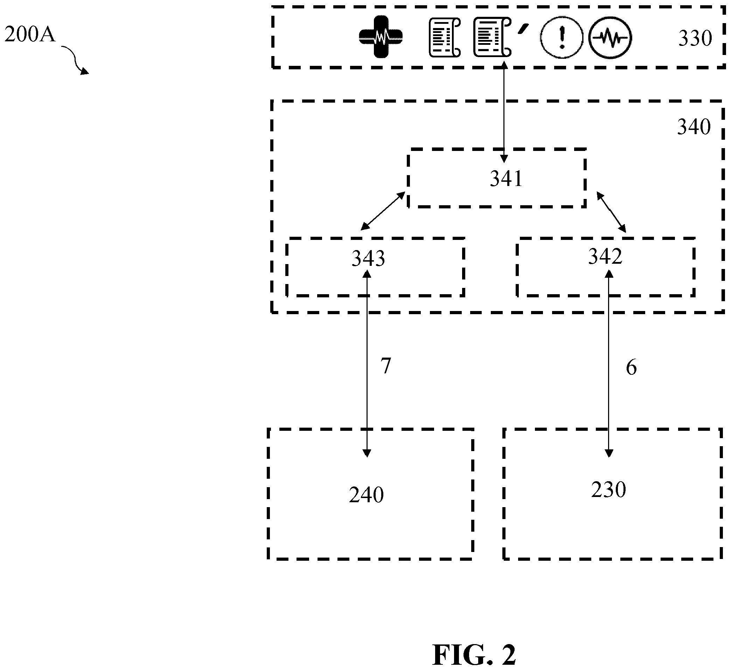

Fig. 2 shows a detailed illustration 200A of frontend webservice 340 of remote communication system 300 and its interaction with UI/UXunit 230 and AR unit 240 of AR device 200 as well as therapy unit 330.

Therapy unit 330 of remote communication system 300 may be implemented as described above with respect to Fig. 1 and may be in internal communication with frontend webservice 340.

Frontend webservice 340 may comprise a central processing unit 341, an AR subsystem 343 and a classic subsystem 342.

Central processing unit 341 may process any data received from therapy unit 330 to be forwarded to AR subsystem 343 and/or classic subsystem 342. Vice versa, it may also be possible that central processing unit 341 receives data from AR subsystem 343 and/or from classic subsystem 342 to be forwarded to therapy unit 330 for further processing and e.g. the initiation of a data transmission to implant 100. Alternatively, it may also be possible that data received from AR subsystem 343 and/or classic subsystem 342 may not be intended to be forwarded to implant 100. In such a case, central processing unit 341 may process the associated data locally without any further forwarding of the associated data. Such data may e.g. be associated with changing the size of a diagram and/or window and/or a change of the window which should be focused (i.e. the window which is in the foreground) as it may be displayed by AR device 200. More generically, any data which may only be associated with the aspect how data is presented by AR device 200 may only be processed by central processing unit 341 and may not require any additional processing by therapy unit 330.

If central processing unit 341 receives data from therapy unit 330 to be forwarded to AR device 200, central processing unit 341 may separate the data according to data which is intended for a 2D representation and according to data which is intended to be used for a 3D representation of the associated data. The former may be forwarded to classic subsystem 242 whereas the latter may be forwarded to AR subsystem 343. This separation may be required as the processing steps for displaying a 2D representation of data may be significantly different from the processing steps required for a 3D representation of data.

Therefore, classic subsystem 342 and AR subsystem 343 may be logically separated and may not know from each other.

Classic subsystem 342 may be understood as a subsystem which comprises a classical webserver (similar to those known from web applications) and which may be configured to create a website-based representation of the data to be transmitted to AR device 220 which may then access the data accordingly.

AR subsystem 343 may comprise dedicated means for handling 3D representations of data and/or 3D objects. AR subsystem 343 may in particular provide dedicated means for calculating location parameters of the 3D objects (e.g. comprising rotation matrices, positioning parameters, metadata, etc.) which may also be understood as semantic aspects of the representation.

Classic subsystem 342 may be in communication with UI/UX unit 230 of AR device 200 by means of communication link 6. UI/UX unit 230 may preferably provide a web-browser for accessing the 2D representation of the received data. However, also any other suitable means for displaying a 2D representation of data received from remote communication system 300 may be possible.

AR subsystem 343 may be in communication with AR unit 240 by means of communication link 7. AR unit 240 may be adapted to or to initiate a display of a 3D representation of the received data. Communication link 7 may possibly only be used to provide high level information associated with the 3D representation of data due to the potentially enormous amount of data associated with a 3D representation of data. Therefore, communication link 7 may possibly only be used to transmit information, e.g., associated with the location of 3D objects (low latency and narrow bandwidth communication may be sufficient). However, the detailed rendering of the 3D objects occurs locally on AR device 220. More specifically, if the AR device 200 is implemented as AR glasses, the AR glasses may be subject to spatial orientation changes (e.g. if the wearer of the AR glasses turns his/her head) which may require a recalculation of the locational parameters describing the 3D representation. In order to avoid any latency in the display of 3D representations, said locational calculations may occur locally on the AR device. Even if communication link 7 is implemented as a 5G communication link (or any other low latency communication technology), the associated bandwidth may not be sufficient to guarantee a full and latency-free calculation on remote communication system 300. Hence, a calculation/rendering of 3D objects on AR device 200 as described above may be preferred.

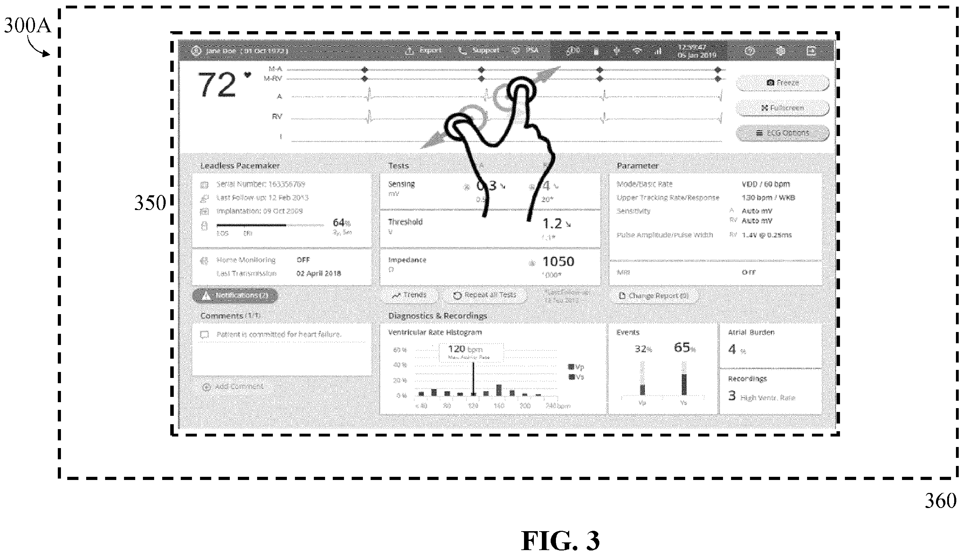

The separation of UI/UX unit 230 and AR unit 240 (and associated data communication links 6 and 7 as well as classic subsystem 342 and AR subsystem 343) may provide the advantage that data associated with a 2D representation and a 3D representation of data may be synchronized, i.e. a 3D representation of data may be adjusted in dependence on the data displayed in a 2D representation and vice versa. This may e.g. facilitate a context specific display of data as it has further been described above. A synchronous 2D and 3D representation of data may be associated with a superimposed representation of 2D and 3D data. It may thus be possible that a diagram (in 2D) is displayed on AR device 200 which may additionally be superimposed by a 3D object (e.g. a 3D representation of a certain parameter which may be associated with the current health state of the patient). However, it may also be possible that 2D and 3D representations are displayed as separated windows as it will further be outlined below with reference to Figs. 3-5.

There may be different application scenarios during which a synchronization between 2D and 3D representations of data may be of value. It may e.g. be possible that a 2D window (2D/classic representation) is displayed (e.g. providing a display of generic data associated with the implant 100 (e.g. the current battery status)) simultaneously with a window associated with a 3D representation of data on AR device 200. Therapy unit 330 may then forward associated data, e.g., IEGM data (received from implant 100) to central processing unit 341. Central processing unit 341 may then forward the IEGM data to AR subsystem 343 and classic subsystem 342 such that AR subsystem 343 receives (a portion of the) data associated with a 3D representation and classic subsystem 342 receives (a portion of the) data associated with a 2D representation.

Alternatively, it may also be possible, that only a 2D representation of e.g. IEGM data is desired. In such a case, therapy unit 330 may forward the associated data to central processing unit 341 which in this case, may only forward the data to classic subsystem 342 for further processing and the initiation of a display of the 2D representation on AR device 200.

Alternatively, it may be possible that a classical 2D window needs to be opened (or is already open) and a user of the AR device performs a certain gesture and/or voice control to initiate the (additional) display of a certain interface (e.g. a test page with impedance values associated with the implant 100) in a 2D or a 3D representation. In such a case, the central processing unit 341 may forward the data associated with the display of the interface (in 2D and/or 3D) to AR subsystem 343. AR subsystem 343 may preferably be used for the processing of variable displays of data (i.e. displays of data which may be displayed interactively and which may be subject to changes).

Alternatively, it may also be possible that a classical 2D window and a 3D window is opened wherein the 3D window may show one or more parameters associated with a pacing mode of the implant 100 as 2D and/or 3D objects (e.g. in 2D/3D text fields). The user of AR device 200 may change the one or more parameters in the classical 2D window or the 3D window. Therapy unit 330 may process the associated change and may forward the associated processed data to central processing unit 341. Central processing unit 341 may then forward the respective data to AR subsystem 343 and classic subsystem 342 such that a 2D and/or 3D representation of the data may be facilitated.

Fig. 3 shows an illustration 300A of a classical 2D programmer interface. If the AR device 200 is embodied as an AR helmet or AR glasses, it may possess a field-of-view 360 which may be visible for the user wearing the AR device. Field-of-view 360 may contain all objects which may be displayed and/or which may be visible for the wearer of the AR device 200 and may be understood in analogy to a physical canvas on which drawings may individually be located.

Field-of-view 360 may comprise a window area 350 which may be used to display data associated with implant 100 and which may be presented in a 2D view. The data presented in a 2D view may e.g. be implemented by means of a classical user interface as it may be known from operating systems or any kind of control software (i.e. the user interface may comprise one or more of buttons, sliders, switches, canvas areas (e.g. areas used for displaying diagrams, histograms, images, etc.), etc.). Window area 350 may preferably be managed by UI/UX unit 230, i.e. UI/UX unit 230 may render the data to be presented in window area 350 and may forward the rendered data to respective processing means (i.e. a projector, a transparent display, etc.) for processing.

Window area 350 may freely be placed within field-of-view 360 e.g. by means of the gesture control of AR device 200.

It may be possible that the user of AR device 200 adjusts one or more parameters associated with the user interface which may be displayed in window area 350. Since said user input may only relate to the interaction with a 2D representation of data, the input may only be received and processed by UI/UX unit 230 as described above with respect to Fig. 1.

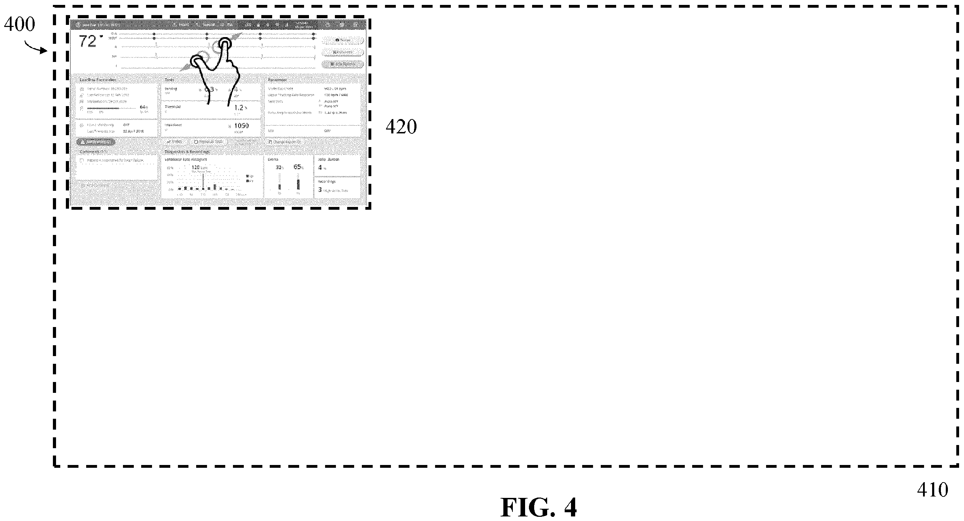

Fig. 4 shows an illustration 400 of a classical 2D programmer interface after shrinking. Illustration 400 comprises a field-of-view 410 which may be identical to the field-of-view 360 as described above with reference to Fig. 3. Window area 420 may be identical to window area 350.

It may be possible that window area 420 occupies the entire field-of-view 410. Alternatively, it may also be possible that window area 420 only occupies a portion of field-of-view 410 as illustrated in Fig. 4. The size of window area 420 relative to the field-of view 410 may e.g. be set by means of the gesture and/or voice control capability of AR device 200.

It may be possible that only a single window area 420 is displayed within field-of-view 410. Alternatively it may also be possible that more than one window area 420 is displayed within field-of-view 410. Different window areas 420 may then be understood as different views of a user interface such as e.g. different tabs of a menu which may be displayed simultaneously. Each of the one or more window areas 420 may individually be placed within field-of-view 410 and the size of each of the window areas 420 may be adjusted freely by the user of AR device 200.

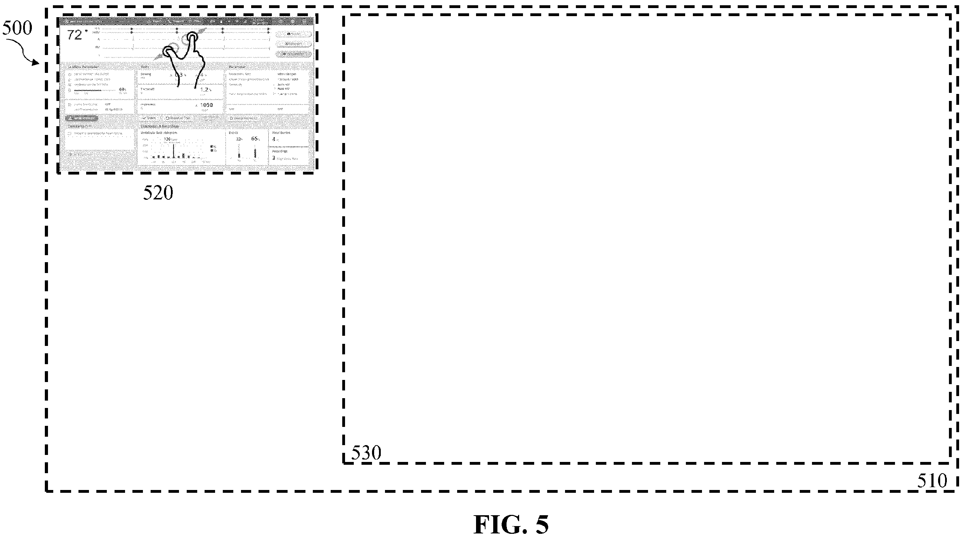

Fig. 5 shows an illustration 500 of a parallel representation of a 2D programmer interface and a window area for additionally displaying 2D and 3D objects.

It may be possible that a field-of-view 510 comprises one or more window areas 520 which may be identical to window area 320 and/or 420 as described above. The one or more window areas 520 may be configured to display a pre-defined content (such as e.g. pre-defined and/or pre-selected diagrams, values of parameters associated with the health state of the patient, implant-specific parameters, etc.).

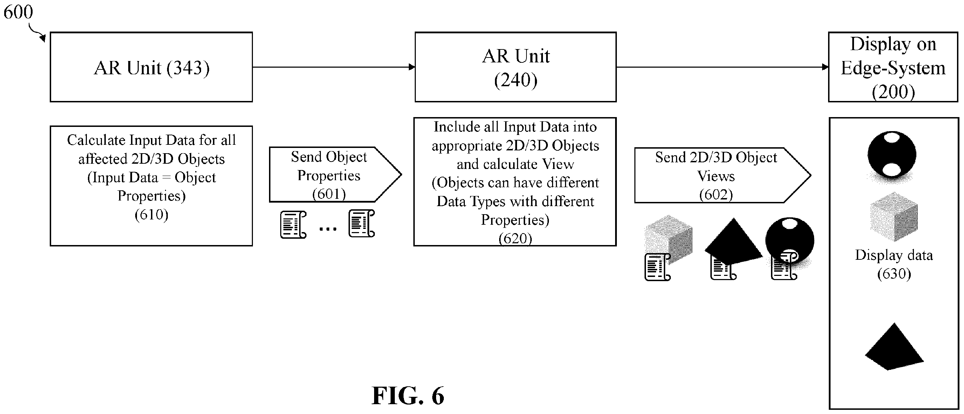

Additionally, field-of-view 510 may comprise a second type of window: window area 530. Window area 530 may be configured to display a variable content. The variable content may relate to a 2D and/or a 3D representation of data. A 3D representation of data may e.g. be understood as representing data in 3D objects (as it will further be described below with reference to Fig. 6) and/or may relate to e.g. the display of various tabs (as known from a 2D menu) but wherein the tabs are not arranged next to each other but behind each other.

This may be understood as a utilization of the depth of a 3D space. A wearer of the AR device 200 may thus be able to bring the tab to the front which contains information which may be seen as of particular relevance for the current situation of a surgery or a check-up.

Window area 530 may preferably be managed by AR unit 240 as outlined above with respect to Figs. 1 and 2.

The relative sizes of the one or more window areas 520 and the one or more window areas 530 may be adjusted freely as outlined above with respect to Fig. 4.

It may in particular be foreseen, that critical functions which may lead to harmful situations for the patient, may only be controlled by the classical one or more 2D window areas 520. Critical functions may relate to repeatedly occurring reconfigurations of implant 100, the activation and de-activation of the ICD therapy, the triggering of emergency shocks, etc.

The field-of-view 510 and/or each of the one or more window areas 520 and/or the one or more window areas 530 may additionally or alternatively be displayed on one or more external monitors. This may provide the advantage that medical staff which may be present during a surgery and/or a check-up may also have an insight onto relevant parameters displayed, e.g., to the surgeon by means of AR device 200 and may be understood as an additional measure to ensure that no effects which may be harmful to the patient remain undiscovered.

Fig. 6 shows an illustration 600 of an actualization of objects in a window area with individual 2D and 3D objects.

The actualization may be initiated by AR unit 343 which may calculate 610 input data for all affected 2D/3D objects. Said calculated data may contain data as described above with reference to Fig. 2 and/or may contain data which may be displayed in a 2D/3D object such as e.g. data to be displayed in a real time diagram, a 3D object (e.g. to highlight the relevance of certain data), etc. The data calculated by AR unit 343 may relate to high level data (i.e. may relate to data which only contains a minimum of data required for allowing a desired display of the associated data) and may also be referred to as object properties.

AR unit 343 may send 601 the relevant object properties to AR unit 240. It may include 620 all object properties into the appropriate one or more 2D/3D objects and calculate a view. Objects can have different data types with different properties. It may be possible that the relevant object properties comprise an identifier associated with a certain 2D/3D object to use. Additionally or alternatively, the relevant object properties may comprise a certain content (data) which may be represented by the object.

AR unit 240 may use the received relevant object properties and may generate a respective object (such as e.g. a diagram). Additionally, AR unit 240 may calculate the e.g. 3D representation of the object, e.g., in dependence on the orientation of the AR device 200 relative to the patient such that the displayed object may follow the view and orientation of the head of user of AR device 200. It may be possible that different objects are associated with different data to be contained therein.

It may be foreseen that AR unit 240 possesses an internal library of 2D/3D objects. Which object to choose may be defined by the identifier comprised in the relevant object properties sent 601 by the AR unit 240. The respective object may be chosen by AR unit 240 and the received content may be displayed therein.

The calculated 602 object views for the 2D and/or 3D objects may be forwarded to means for displaying the objects on AR device 200 which may display 630 the calculated view of the 2D and/or 3D objects.

## Claims

1. A method, by an augmented reality, AR, device (200), for communicating with an implant (100), comprising:
receiving a user input associated with data to be sent to the implant (100);
transmitting a communication to the implant (100) based on the data.

2. The method of claim 1, further comprising:
sending an indication associated with the user input to a remote communication system (300);
receiving a response to the indication from the remote communication system (300), and
transmitting the communication to the implant (100) upon receiving the response.

3. The method of claim 2, wherein the indication comprises the user input, and wherein the response comprises the data in an encrypted manner, preferably encrypted by the remote communication system (300), preferably with a secret (101) of the implant (100).

4. The method of any of claims 1 to 3, wherein the user input comprises a selection in an AR representation.

5. The method of any of claims 1 to 4, wherein the user input comprises a gesture control and/or a voice control.

6. A method, by an augmented reality, AR, device (200), for communicating with an implant (100), comprising:
receiving data associated with the implant (100) from the implant (100);
displaying an AR representation based on the received data.

7. The method of claim 6, further comprising:
sending an indication associated with the received data to a remote communication system (300).

8. The method of claim 7, further comprising:
receiving a response to the indication from the remote communication system (300), and
displaying the AR representation based on the response.

9. The method of claim 8, wherein the response includes at least a portion of the received data in a decrypted manner.

10. Method according to any of claims 1 to 9, wherein communication between the AR device (200) and the remote communication system (300) is encrypted, preferably with a secret (102) of the AR device (200).

11. An augmented reality, AR, device (200) for communicating with an implant (100), comprising:
means for receiving a user input associated with data to be sent to the implant (100);
means for transmitting a communication to the implant (100) based on the data.

12. An augmented reality, AR, device (200) for communicating with an implant (100), comprising:
means for receiving data associated with the implant (100) from the implant (100);
means for displaying an AR representation based on the received data.

13. A method, by a remote communication system (300), for communicating with an augmented reality, AR, device (200), comprising:
providing at least one programming option, associated with an implant, to the AR device (200) for displaying,
receiving an indication, from the AR device (200), based at least in part on the at least one programming option; and/or
receiving data from an implant via the AR device (200),
processing at least a portion of the received data,
providing display information to the AR device (200) at least in part based on the processing.

14. A remote communication system (300), for communicating with an augmented reality, AR, device (200), comprising:
means for providing at least one programming option, associated with an implant (100), to the AR device (200) for displaying,
means for receiving an indication, from the AR device (200), based at least in part on the at least one programming option; and/or
means for receiving data from an implant (100) via the AR device (200),
means for processing at least a portion of the received data,
means for providing display information to the AR device (200) at least in part based on the processing.

15. A system for communicating with an implant, comprising at least two of the following:
the augmented reality device (200) of claim 11 and/or 12;
the remote communication system (300) of claim 14;
an implant (100).
